# NEUE EUROPÄISCHE PATENTSCHRIFT

(11) **EP 0 560 784 B2**
(45) Veröffentlichungstag und Bekanntmachung des Hinweises auf die Entscheidung über den Einspruch: **24.06.1998**
(45) Hinweis auf die Patenterteilung: 18.01.1995
(21) Anmeldenummer: 91918458.0
(22) Anmeldetag: 25.10.1991
(51) Int. Cl.: C09D 5/10

(54) **PULVERGEMISCH ZUR HERSTELLUNG EINES GRUNDBESCHICHTUNGSMITTELS FÜR STAHLFLÄCHEN**
POWDER MIXTURE FOR MAKING AN UNDERCOATING AGENT FOR STEEL SURFACES
MELANGE PULVERULENT POUR FABRIQUER UNE COUCHE DE FOND POUR SURFACES D'ACIER

(30) Priorität: 27.11.1990 DE 4037598
(43) Veröffentlichungstag der Anmeldung: 22.09.1993
(73) Patentinhaber: Sika Chemie GmbH, D-70439 Stuttgart (DE)
(72) Erfinder: HERZOG, Siglinde, D-7014 Kornwestheim (DE); PETRIKAT, Axel, D-7140 Ludwigsburg (DE); WEKENMANN, Guido, verstorben (DE)
(74) Vertreter: Wolf, Eckhard, Dr.-Ing.
(86) Internationale Anmeldenummer: EP9102023
(87) Internationale Veröffentlichungsnummer: WO9209663

(56) Entgegenhaltungen:
- EP-A- 513 883
- DE-A- 2 352 130
- DE-A- 2 352 150
- DE-A- 2 456 299
- DE-A- 2 614 261
- DE-B- 2 240 724
- JP-A-58 187 459
- JP-A-60 032 861
- WACKER Produktinformation "Vinnapas-Dispersionspulver RI 538 Z", August 1984
- HOECHST Produktinformation "Mowilith-Pulver", Dezember 1972
- HOECHST Verkaufsprogramm, 1982, Seite 76
- AKZO Datenblatt "Zinkprimer WAD" Referenz Nr. M-0332, April 1991

## Beschreibung

Die Erfindung betrifft ein Pulvergemisch zur Herstellung eines antikorrosiven zinkhaltigen Grundbeschichtungsmittels für Stahlflächen.

Die Verwendung von Zinkstaub und/oder Zinkblättchen als Korrosionsschutzpigment in organischen Grundbeschichtungsmitteln ist bekannt. Die Grundbeschichtungsmittel bestehen im wesentlichen aus einem Kunstharz, das zur Einstellung einer im Gebrauchszustand weichen Konsistenz in einem organischen Lösemittel gelöst ist. Als organische Losemittel kommen vor allem aromatische Kohlenwasserstoffe, wie Xylol, in Betracht. Das Grundbeschichtungsmittel wird in seiner flüssigen Form in geschlossenen Behältern gelagert und zur Anlieferung gebracht. Beim bestimmungsgemäßen Gebrauch wird es unmittelbar auf die zuvor gereinigte Stahlfläche aufgetragen. Durch Verdampfen des Lösemittels härtet das Gemisch aus und bildet eine feste geschlossene Schicht, in welcher der Zinkstaub in feinverteilter Form enthalten ist. Beim Eindringen von feuchter Luft in die Grundbeschichtung bildet sich an den Zinkteilchen vor allem basisches Zinkcarbonat (4ZnO•CO₂•4H₂O), das unter Volumenvergrößerung zu einer Verdichtung der Grundbeschichtung führt und die darunterliegende Stahloberfläche vor einer Zerstörung schützt. Ein weiterer antikorrosiver Effekt ist auf die kathodische Schutzwirkung des Zinkstaubpigments zurückzuführen.

Bei der Applikation der bekannten Zinkstaub-Grundbeschichtungsmittel werden erhebliche Mengen an organischen Lösungsmitteln an die Umgebungsluft abgegeben. Die dadurch bedingte Umweltschädigung wurde dabei vielfach in Kauf genommen.

Zur Vermeidung dieses Nachteils ist es bekannt (DE-A-24 56 299), ein Pulvergemisch zur Herstellung eines antikorrosiven zinkhaltigen Grundbeschichtungsmittels für Stahlflächen zu verwenden. Das bekannte Pulvergemisch besteht ausschließlich aus einer Zink-Talkum-Mischung. Diese Pulvermischung wird zur Herstellung des Grundbeschichtungsmittels an der Verwendungsstelle in eine wässrige Dispersion bestehend aus Copolymerisat und in Wasser gelöstem Phosphat eingerührt. Neben dem Pulvergemisch ist also eine wässrige Dispersion vorgesehen, die getrennt gelagert und zur Verwendungsstelle transportiert werden muß und dort nach einer vorgeschriebenen Rezeptur mit der Pulvermischung gemischt werden muß. Diese Mischung wird vor Ort üblicherweise nicht vom Chemiker, sondern von einem Anstreicher oder von Hilfspersonal vorgenommen, denen häufig das theoretische und anwendungstechnische Verständnis fehlt. Es kann daher leicht zu Fehldosierungen und damit zu einer fehlerhaften Beschichtung der Stahlflächen kommen. Dies gilt um so mehr, als auch die homogene Durchmischung der zinkhaltigen Pulvermischung mit dem organischen Dispersionsmittel davon abhängt, daß vor Ort geeignete Mischgeräte vorhanden sind und das Personal mit der notwendigen Sorgfalt arbeitet.

Ausgehend hiervon liegt der Erfindung die Aufgabe zugrunde, ein Pulvergemisch der eingangs angegebenen Art zu entwicklen, bei welchem die Lagerung und der Transport eines zusätzlichen flüssigen Dispersionsmittels entbehrlich ist und mit welchem an der Verwendungsstelle durch einfachen Wasserzusatz sehr einfach ein homogenes Grundbeschichtungsmittel hergestellt werden kann.

Zur Lösung dieser Aufgabe wird gemäß der Erfindung vorgeschlagen, daß zunächst ein Gemisch aus getrocknetem wasserreemulgierbarem pulverförmigem Dispersionsmittel und mit Wasser reaktivem pulver- oder blättchenförmigen Zink hergestellt wird, das in wasserdichten Säcken gelagert und transportiert werden kann.

Das Gemisch enthält zweckmäßig ein wasserreemulgierbares Dispersionsmittel aus der folgenden Gruppe:
- ein Vinylacetat-Copolymer, insbesondere Vinylacetat-Ethylen-Copolymer, Vinylacetat-Vinylester-Copolymer und/oder Vinylacetat-Vinyllaurat-Vinylversatat-Copolymer
- Reinacrylat
- Ethylen-Vinyllaurat-Vinylchlorid-Copolymer
- ein Styrol-Copolymer, insbesondere Styrolacrylat, Styrolbutadien.

Weiter weist das Gemisch zweckmäßig einen in der Lackindustrie an sich bekannten pulvrigen Füllstoff oder Extender aus der Gruppe Talkum, Bariumsulfat und Glimmer und/oder ein vorzugsweise organisches Pigment auf. Diese Stoffe helfen, die Korrosionsschutzeigenschaften zu verbessern und die gewünschte Rheologie einzustellen.

Um bei der Applikation eine leicht homogenisierbare Mischung aus den pulvrigen Bestandteilen mit Wasser zu erhalten, ist die Verwendung an sich bekannter Additive, wie Netzmittel, Entschäumer, Thixotropiermittel und Filmbildungshilfsmittel von Vorteil.

Das erfindungsgemäße Trockengemisch enthält vorteilhafterweise folgende Bestandteile:
1 bis 30 Gewichtsprozent Dispersionspulver aus der Gruppe:
- Vinylacetat Copolymer, insbesondere Vinylacetat-Vinylester-Copolymer oder Vinylacetat-Vinyllaurat-Vinylversatat-Copolymer
- Reinacrylat
- Ethylen-Vinyllaurat-Vinylchlorid-Copolymer
- Styrol-Copolymer, insbesondere Styroacrylat, Styrolbutadien
70 bis 99 Gewichtsprozent Pigmente / Füllstoffe bestehend aus:
- 2 bis 100 % Zinkpulver und/oder Zinkblättchen
- 0 bis 98 % Füllstoffe wie Talkum (3MgO•4SiO₂•H₂O), Schwerspat (BaSO₄) oder Glimmer (K₂O•3Al₂O₃•6SiO₂•2H₂O, oder Plastorit-Typen)
- Rest: pulvrige Additive, wie Entschäumer, Netzmittel, Filmbildehilfsmittel, Thixotropiermittel.

Das pulverförmige Trockengemisch kann in wasserdichten Säcken gelagert und transportiert werden. Kurz vor der Applikation werden 100 Gewichtsteile der pulvrigen Mischung mit 5 bis 50 Gewichtsteilen Wasser unter Rühren vermischt. Nach dem Verdampfen des Wassers bildet sich eine geschlossene zusammenhängende Schicht. Die guten Korrosionsschutzeigenschaften der auf diese Weise hergestellten Beschichtung lassen darauf schließen, daß das mit Wasser reaktive Zinkpulver durch das wasseraufnehmende Dispersionsmittel während der kurzen Applikationszeit gegen Wasserzutritt weitgehend abgeschirmt wird.

### Ausführungsbeispiel 1

25 Gewichtsteile eines pulverförmigen Vinylacetat-Vinylester-Copolymer als Dispersionspulver wurden mit 48 Gewichtsteilen Zinkpulver, 25 Gewichtsteilen Talkum und einem Rest pulverförmigen Additiven unter Bildung einer trockenen pulvrigen Mischung gemischt.

### Ausführungsbeispiel 2

10 Gewichtsteile Styrolacrylat als Dispersionspulver, 64 Gewichtsteile Zinkblättchen, 25 Gewichtsteile Bariumsulfat-Füllstoffe und ein Rest pulverförmiger Additive wurden unter Bildung einer trokkenen, pulvrigen Mischung gemischt.

100 Gewichtsteile der trockenen, pulvrigen Mischungen nach den Ausführungsbeispielen 1 und 2 wurden mit 30 Gewichtsteilen Wasser unter Rühren vermischt und unmittelbar danach auf eine gereinigte Stahloberfläche als Grundbeschichtung aufgetragen.

Nach einer Woche Trocknungszeit bei einer Temperatur von 23 °C und 50 % Luftfeuchtigkeit wurde die beschichtete Oberfläche dem Salzsprühtest nach DIN 50021-SS unterworfen. Es wurde kein Punktrostbefall festgestellt, wie er sonst bei wässrigen Grundbeschichtungsmitteln auftritt.

Zusammenfassend ist folgendes festzustellen: Die Erfindung betrifft ein antikorrosives zinkhaltiges Grundbeschichtungsmittel für Stahlflächen, das frei von organischen Lösemitteln ist und aus einem Gemisch aus getrocknetem, wasserreemulgierbarem pulverförmigem Dispersionsmittel und mit Wasser reaktivem pulver- oder blättchenförmigem Zink besteht, das unmittelbar vor der Bearbeitung mit Wasser vermischt wird. Das auf diese Weise gebildete Grundbeschichtungsmittel besitzt gleich gute Korrosionsschutzeigenschaften wie die bekannten, ausschließlich in organischen Lösemitteln gelösten einkomponentigen Zinkstaubgrundbeschichtungen.

## Patentansprüche

1. Pulvergemisch zur Herstellung eines antikorrosiven zinkhaltigen Grundbeschichtungsmittels für Stahlflächen, **gekennzeichnet durch** ein Gemisch aus getrocknetem wasserreemulgierbarem pulverförmigem Dispersionsmittel und mit Wasser reaktivem pulver- oder blättchenförmigem Zink.

2. Pulvergemisch nach Anspruch 1, **dadurch gekennzeichnet**, daß das Gemisch ein Dispersionsmittel aus der Gruppe
- Vinylacetat-Copolymer, insbesondere Vinylacetat-Ethylen-Copolymer, Vinylacetat-Vinylester-Copolymer oder Vinylacetat-Vinyllaurat-Vinylversatat-Copolymer
- Reinacrylat
- Ethylen-Vinyllaurat-Vinylchlorid-Copolymer
- Styrol-Copolymer, insbesondere Styrolacrylat, Styrolbutadien.
enthält.

3. Pulvergemisch nach Anspruch 1 oder 2, **dadurch gekennzeichnet**, daß das Gemisch mindestens einen pulvrigen Füllstoff aus der Gruppe Talkum, Bariumsulfat und Glimmer und/oder ein vorzugsweise organisches Pigment enthält.

4. Pulvergemisch nach einem der Ansprüche 1 bis 3, **dadurch gekennzeichnet**, daß das Gemisch zusätzlich mindestens ein als Entschäumer, Netzmittel, Thixotropiermittel, Filmbildungshilfsmittel ausgebildetes pulvriges Additiv enthält.

5. Pulvergemisch nach einem der Ansprüche 1 bis 4, **gekennzeichnet durch** ein Trockengemisch mit folgender Zusammensetzung 1 bis 30 Gewichtsprozent Dispersionspulver aus der Gruppe:
- Vinylacetat Copolymer, insbesondere Vinylacetat-Vinylester-Copolymer oder Vinylacetat-Vinyllaurat-Vinylversatat-Copolymer
- Reinacrylat
- Ethylen-Vinyllaurat-Vinylchlorid-Copolymer
- Styrol-Copolymer, insbesondere Styroacrylat, Styrolbutadien
70 bis 99 Gewichtsprozent Pigmente / Füllstoffe bestehend aus:
- 2 bis 100 % Zinkpulver und/oder Zinkblättchen
- 0 bis 98 % Füllstoffe wie Talkum, Schwerspat oder Glimmer
- Rest: pulvrige Additive, wie Entschäumer, Netzmittel, Filmbildehilfsmittel, Thixotropiermittel.

## Claims

1. A powder mixture for making an anticorrosive zinc-containing undercoating agent for steel surfaces, characterized by a mixture of a dried, water-reemulsifiable powdery dispersion agent and a water-reactive zinc in powder or flake form.

2. The powder mixture according to Claim 1, characterized in that the mixture contains a dispersion agent from the group
- vinylacetate-copolymer, in particular vinylacetate-ethylene-copolymer, vinylacetate-vinylester-copolymer or vinylacetate-vinyllaurate-vinyl-versatate-copolymer
- reinacrylate
- ethylene-vinyllaurate-vinylchloride-copolymer
- styrene-copolymer, in particular styreneacrylate, styrenebutadiene.

3. The Powder mixture according to Claim 1 or 2, characterized in that the mixture contains at least one powdery filler from the group of talcum, barium sulfate and mica and/or a preferably organic pigment.

4. The powder mixture according to one of the Claims 1 to 3, characterized in that the mixture contains in addition at least one powdery additive designed as a defoamer, wetting agent, thixotropic agent, an agent promoting film formation.

5. The powder mixture according to one of the Claims 1 to 4, characterized by a dry mixture with the following composition
1 to 30 percent by weight of dispersion powder from the group:
- vinylacetate-copolymer, in particular vinylacetate-vinylester-copolymer or vinylacetate-vinyllaurate-vinyl-versatate-copolymer
- reinacrylate
- ethylene-vinyllaurate-vinylchloride-copolymer
- styrene-copolymer, in particular styreneacrylate, styrenebutadiene
70 to 99 percent by weight of pigments/fillers consisting of:
- 2 to 100% zinc powder and/or zinc flakes
- 0 to 98% filler like talcum, barium sulfate or mica
- the remainder: powdery additives, like defoamer, wetting agent, agent promoting film formation, thixotropic agent.

## Revendications

1. Mélange pulvérulent pour la préparation d'une couche de fond zincifère anticorrosive pour surfaces d'acier, caractérisé par un mélange de dispersant pulvérulent sec, émulsifiable à l'eau, et de zinc pulvérulent ou en feuilles, réactif à l'eau.

2. Mélange pulvérulent suivant la revendication 1, caractérisé en ce que le mélange comporte un dispersant du groupe:
- Copolymère d'acétate de vinyle, copolymère d'acétate de vinyle - éthylène, notamment, copolymère d'acétate de vinyle - vinylester ou d'acétate de vinyle - laurate de vinyle - versatate de vinyle.
- Acrylate pur.
- Copolymère d'éthylène - laurate de vinyle - chlorure de vinyle.
- Copolymère de styrène, styrène-acrylate, styrène-butadiène, notamment.

3. Mélange pulvérulent suivant l'une des revendications 1 et 2, caractérisé en ce que le mélange comporte au moins une charge pulvérulente du groupe poudre de talc, sulfate de baryum et mica, et/ou un pigment organique de préférence.

4. Mélange pulvérulent suivant l'une quelconque des revendications 1 à 3, caractérisé en ce que le mélange comporte en supplément un additif pulvérulent, au moins, réalisé sous forme d'agent antimousse, mouillant, thixotrope, filmogène.

5. Mélange pulvérulent suivant l'une quelconque des revendications 1 à 4, caractérisé par un mélange sec de composition suivante:
1 à 30 pourcentages en poids de poudre dispersante du groupe:
- Copolymère d'acétate de vinyle, copolymère d'acétate de vinyle - vinylester, notamment, ou d'acétate de vinyle - laurate de vinyle - versatate de vinyle.
- Acrylate pur.
- Copolymère d'éthylène - laurate de vinyle - chlorure de vinyle.
- Copolymère de styrène, styrène-acrylate, styrène-butadiène, notamment.
70 à 99 pourcentages en poids de pigments/charges, composés de:
- 2 à 100% de poudre de zinc et/ou feuilles de zinc.
- 0 à 98% de charges, telles que poudre de talc, baryte ou mica.
- Reste: additifs pulvérulents, tels qu'agents antimousses, mouillants, filmogènes, thixotropes.
